# EUROPÄISCHE PATENTSCHRIFT

(11) **EP 3 014 226 B1**
(45) Veröffentlichungstag und Bekanntmachung des Hinweises auf die Patenterteilung: **07.07.2021**
(21) Anmeldenummer: 14725081.5
(22) Anmeldetag: 13.05.2014
(51) Int. Cl.: G01F 1/684, G01F 15/14, G01F 15/18, F02M 35/10, F02D 41/18, G01F 5/00

(54) **SENSORVORRICHTUNG ZUR ERFASSUNG WENIGSTENS EINER EIGENSCHAFT EINES IN EINEM KANAL STRÖMENDEN FLUIDEN MEDIUMS**
SENSOR FOR MESURING AT LEAST A PROPERTY OF A FLUID FLOWING IN A CHANNEL
DISPOSITIF DE MESURE D'AU MOINS UNE PROPRIÉTÉ D'UN FLUIDE S'ÉCOULANT DANS UN CANAL

(30) Priorität: 26.06.2013 DE 102013212162
(43) Veröffentlichungstag der Anmeldung: 04.05.2016
(73) Patentinhaber: Robert Bosch GmbH, 70442 Stuttgart (DE)
(72) Erfinder: UNGER, Holger, 71686 Remseck (DE); KONZELMANN, Uwe, 71679 Asperg (DE); WAGNER, Ulrich, 80689 Muenchen (DE); EPPLER, Michael, 73760 Ostfildern (DE); SANCHO DE CASTRO, Manuel Blas, 71336 Waiblingen-Neustadt (DE); SOMMER, Edda, 70563 Stuttgart (DE)
(86) Internationale Anmeldenummer: PCT/EP2014/059767
(87) Internationale Veröffentlichungsnummer: WO 2014/206629

(56) Entgegenhaltungen:
- EP-A1- 2 339 311
- EP-A1- 2 735 782
- EP-A2- 1 855 090
- DE-A1- 19 946 900
- DE-A1-102010 020 264
- DE-U1-202011 050 287
- US-A1- 2002 172 789
- None

## Beschreibung

### Stand der Technik

Die Erfindung betrifft eine Sensorvorrichtung zur Erfassung wenigstens einer Eigenschaft eines in einem Kanal strömenden fluiden Mediums mit den Merkmalen des Oberbegriffs des unabhängigen Vorrichtungsanspruchs.

Bei vielen Prozessen, beispielsweise auf dem Gebiet der Verfahrenstechnik, der Chemie, des Maschinenbaus oder auf dem Gebiet von Verbrennungskraftmaschinen muss dem Prozess während bestimmter Prozess-Schritte eine ganz bestimmte Masse wenigstens eines fluiden Mediums mit wohldefinierten Eigenschaften wie zum Beispiel einer Temperatur oder einem Druck zugeführt werden. Insbesondere Verbrennungsprozesse, welche unter geregelten Bedingungen ablaufen sollen, sind auf die genaue Bestimmung der Gasmasse und der Eigenschaften des verwendeten Fluids angewiesen. Zur Bestimmung des Durchsatzes des fluiden Mediums, seines Druckes und/oder seiner Temperatur werden dabei verschiedene Typen von Sensoren eingesetzt, welche diesem fluiden Medium ausgesetzt sind.

Über die Lebensdauer einer derartigen Sensorvorrichtung kann es vorkommen, dass sich Partikel, die sich in dem strömenden Fluid befinden, auf dem die Eigenschaften des fluiden Mediums bestimmenden Sensorelement der Sensorvorrichtung niederschlagen und so mit der Zeit das Mess-Signal verfälschen. Insbesondere Partikel, welche sich während ihres Strömungsweges elektrisch aufgeladen haben oder elektrisch polarisiert worden sind, werden schlagen sich erfahrungsgemäß auf dem Sensorelement nieder und bleiben dann aufgrund von Oberflächenhaftungskräften dauerhaft auf ihm haften.

Aus der DE 10 2005 057 574 A1 ist ein Luftmassenmesser mit Gradientenfeld-Ölabscheidung bekannt. Dieser Luftmassenmesser weist im Sensorgehäuse im Bereich des Sensorelements zur Luftmassenbestimmung eine Gradientenfelderzeugungsvorrichtung auf, wobei die Gradientenfelderzeugungsvorrichtung ausgestaltet ist, um ein den Luftmassenstrom zumindest teilweise durchsetzendes elektrisches Feld mit einem Feldgradienten zu erzeugen. Dabei werden Öltröpfchen, welche im Luftmassenstrom enthalten sind, elektrisch polarisiert. Durch das Gradientenfeld wirkt eine Nettokraft auf die Öltröpfchen, welche ausgenutzt werden kann, um die Öltröpfchen von der Sensoroberfläche wegzutreiben und somit eine Kontamination der Sensoroberfläche zu vermindern.

Aus der DE 10 2005 057 575 A1 ist ein Luftmassenmesser mit elektrischer Ölabscheidung bekannt. Dieser Luftmassenmesser weist im Sensorgehäuse im Bereich des Sensorelements zur Luftmassenbestimmung eine Felderzeugungsvorrichtung auf, welche ausgestaltet ist, um ein vorzugsweise zumindest teilweise homogenes elektrisches Feld zu erzeugen, welches den Luftmassenstrom durchsetzt. Durch elektrische Effekte, insbesondere eine Ablenkung und/oder Ausfällung koagulierter Öltröpfchen, kann in dieser Ausgestaltung des Heißfilmluftmassenmessers eine Kontamination der Sensoroberfläche durch Öltröpfchen vermindert werden.

Die derart beschriebenen Lösungen zur Verminderung von Partikelablagerungen auf dem Sensorelement bedürfen einer aufwändigeren Konstruktion als herkömmliche Luftmassensensoren und erfordern außerdem das Anlegen einer hohen elektrischen Spannung, die im Bereich von mehreren 100 V bis mehreren 1000 V liegt, um die gewünschten Effekte zu erzielen. Um derartige Spannungen bereitzustellen ist entweder ein zusätzlicher Hochspannungsanschluss am Luftmassensensor vorzuhalten oder es ist ein zusätzliches Bauelement zur Spannungswandlung notwendig. Darüber hinaus setzen diese Lösungen nur auf ein Entfernen von elektrisch geladenen Öltröpfchen und verhindern nicht die Entstehung elektrisch geladener Teilchen.

Aus der DE 10 2010 020 264 A1 ist ein Luftmassenmesser mit einem Gehäuse aus einem Kunststoff, der elektrisch isolierend wirkt, bekannt. In dem Gehäuse des Luftmassenmessers ist ein Strömungskanal ausgebildet. Außerdem ist in dem Gehäuse ein Sensorelement angeordnet, das die im Strömungskanal strömende Luftmasse erfasst. Weiterhin sind in dem Gehäuse Leiterbahnen angeordnet, die das Sensorelement mit Anschlusspins verbinden. Um elektrostatisch geladene Partikel im Luftmassenstrom zu entladen und das Sensorelement derart vor der Ablagerung dieser Partikel zu schützen weist zumindest ein Teil des im Gehäuse angeordneten Strömungskanals elektrisch dissipative Eigenschaften auf, indem dieser Teil des Strömungskanals beispielsweise aus einem Kunststoff mit leitfähigen Polymeren und/oder aus Kunststoff mit leitfähigen Fasern und/oder aus Kunststoff mit Leitruß gefertigt ist.

Auch diese Lösung verhindert nicht das Entstehen elektrisch geladener Partikel. Vielmehr werden bei dieser Lösung bereits entstandene elektrisch geladene Partikel unmittelbar vor dem Sensorelement durch einen Aufprall auf die Wand des im Sensorgehäuse angeordneten Strömungskanals entladen. Die Fertigung einer derartigen Vorrichtung, bei der Teile des Sensorgehäuses aus elektrisch isolierendem Kunststoff bestehen und andere Teile des Sensorgehäuses aus elektrisch leitfähigem Kunststoff gebildet sind, ist fertigungstechnisch aufwändig und teuer.

### Offenbarung der Erfindung

### Vorteile der Erfindung

Gegenüber dem Stand der Technik weist die erfindungsgemäße Sensorvorrichtung zur Erfassung wenigstens einer Eigenschaft eines in einem Kanal strömenden fluiden Mediums mit den Merkmalen des unabhängigen Vorrichtungsanspruchs den Vorteil auf, dass die gesamte Kanalstückwand des Kanalstücks vollständig aus elektrisch leitfähigem Kunststoff gebildet ist, wodurch die Herstellung des Kanalstücks besonders einfach und kostengünstig in einem einzigen Fertigungsschritt, beispielsweise einem Spritzgussverfahren, erfolgen kann. Dadurch, dass an der Außenseite des Kanalstücks oder in der Wandung der Kanalstückwand wenigstens ein elektrisch leitfähiges Kontaktierelement zur elektrischen Kontaktierung der Kanalstückwand angeordnet ist, wobei das wenigstens eine Kontaktierelement mit einem festen elektrischen Potenzial (POT) außerhalb des Kanalstücks, insbesondere dem Massepotenzial (GND), derart verbindbar ist, dass die gesamte Kanalstückwand, auf dem festen elektrischen Potenzial (POT, GND) liegt, wird vorteilhaft bewirkt, dass auf besonders einfache Weise ein zuverlässiger elektrischer Kontakt mit dem Kanalstück herstellbar ist.

Durch die auf dem festen elektrischen Potenzial (POT), insbesondere auf dem Massepotenzial (GND), liegende Kanalstückwand wird besonders vorteilhaft eine Ablagerung von im strömenden fluiden Medium befindlichen Partikeln, Schmutzpartikeln, Öltröpfchen oder dergleichen auf dem Sensorelement vermieden oder zumindest stark reduziert. Dabei kommen zwei Effekte zu tragen.

Als erster Effekt wird durch die auf dem festen elektrischen Potenzial (POT, GND) liegende Kanalstückwand vorteilhaft bewirkt, dass sich die im Kanalstück strömenden Partikel erst überhaupt nicht elektrisch aufladen, da sie sich nach ihrem Eintritt in das Kanalstück in einer Art Faradayschen Käfig bewegen. Der Innenraum des Kanalstücks ist dadurch elektrisch abgeschirmt und eine Polarisierung oder Aufladung der Partikel durch zeitlich nicht vorhersehbar veränderliche elektrische Felder im Kanalstück ist auf diese Weise wirksam stark unterdrückt oder gar ausgeschlossen. Derartige zeitlich nicht vorhersehbar veränderliche elektrische Felder im Kanalstück können beispielsweise durch die innere Reibung des Luftstroms an einer Innenwand des Kanalstücks oder durch die Reibung von dem Kanalstück vorgelagerten oder nachgelagerten mit dem Kanalstück verbundenen Komponenten oder durch die Einstrahlung von elektromagnetischen Feldern entstehen. Insbesondere elektrisch nicht leitfähige Kunststoffe bzw. Materialien, welche nicht auf einem gemeinsamen elektrischen Potenzial liegen, zum Beispiel durch die Trennung elektrisch leitender von elektrisch isolierenden Abschnitten, können auf derart in verschiedenen Abschnitten eines derartigen Kanalstücks unterschiedliche und zeitlich variierende Ladungen aufweisen. In der Folge weisen solche Abschnitte auch unterschiedlich auf den Innenraum des Kanalstücks wirkende elektrische Felder auf, die wiederum zu einer Polarisierung oder gar einer elektrischen Ladung von Partikeln führen können.

Als zweiter Effekt wird durch die auf dem festen elektrischen Potenzial (POT), insbesondere auf dem Massepotenzial (GND), liegende Kanalstückwand vorteilhaft bewirkt, dass elektrisch geladene Partikel, Schmutzpartikeln oder Öltröpfchen bei einem Stoßkontakt mit der Kanalstückwand elektrisch umgeladen bzw. entladen werden und sich auf diese Weise die Wahrscheinlichkeit für eine durch elektrostatische Kräfte induzierte Ablagerung dieser Partikel auf dem Sensorelement deutlich verringern lässt. Dieser Effekt wirkt sowohl auf im strömenden fluiden Medium befindliche Partikel, die bereits beim Eintritt in den Innenraum des Kanalstücks elektrisch geladen und/oder elektrisch polarisiert sind, als auch auf Partikel, die erst nach dem Eintritt in das Kanalstück elektrisch geladen und/oder elektrisch polarisiert werden, beispielsweise mittels durch die innere Reibung der Luftströmung im Innenraum des Kanalstücks induzierte elektrische Felder oder durch von außerhalb des Kanalstücks einstrahlende elektromagnetische Felder, beispielsweise aus der Fahrzeugelektronik.

Bei den Partikeln kann es sich im Grunde um Feststoffe handeln, die beispielsweise aus einem elektrisch isolierenden Material bestehen. Diese Feststoffe können dann elektrisch polarisiert sein, d.h. z.B. an einem Ende einen positiven Ladungsüberschuss aufweisen und am anderen Ende einen negativen Ladungsüberschuss. In Summe sind diese Partikel dann möglicherweise sogar elektrisch neutral oder im Wesentlichen neutral. Wegen ihres elektrisch isolierenden Materials kann aber ein Ladungsausgleich von einem Ende des Partikels zum anderen Ende unter Umständen länger dauern, als sich der Partikel in der Nähe des Sensorelements aufhält. Daher kann ein derart polarisierter Partikel durchaus von einem elektrostatischen Feld abgelenkt werden und so z.B. zu dem Sensorelement hingezogen werden. Außerdem ist es möglich, dass bei Kontakt mit einer Wand, an der ein Potenzial anliegt, gegebenenfalls nur der eine Teil des Partikels, der mit der Wand in Berührung kommt, umgeladen wird, so dass anschließend die Summe der elektrischen Ladungen auf dem Partikel verändert ist.

Daher ist es besonders vorteilhaft, wenn die Ausbildung einer elektrischen Polarisierung oder gar einer elektrischen Aufladung des Partikels unter Ausnutzung des ersten Effekts möglichst unterbunden wird.

Vorteilhafte Ausbildungen und Weiterbildungen der Erfindung werden durch die in den abhängigen Ansprüchen angegebenen Maßnahmen ermöglicht.

Eine Weiterbildung der Erfindung sieht vor, dass das Kanalstück in einem von dem fluiden Medium durchströmten Kanal angeordnet ist, wobei der Kanal einen Kanalinnenraum und eine Kanalwand aufweist, wobei zumindest Teile des den Kanal durchströmenden fluiden Mediums das Kanalstück durchströmen, wobei das Sensorgehäuse durch den Kanal und die Einführöffnung hindurch derart in das Kanalstück eingeführt ist, dass das Sensorelement dem in dem Kanalstück strömenden fluiden Medium ausgesetzt ist. In dieser Weiterbildung kann der Kanal beispielsweise aus einem nicht leitenden Kunststoff, einer Keramik oder einem Metall gefertigt sein. Die Weiterbildung der Erfindung ermöglicht dabei eine günstige Fertigung der zwei, beispielsweise zunächst separat hergestellten, Elemente des Kanals und des Kanalstücks, was die Herstellkosten erheblich vergünstigt, da beispielsweise auf ein Zweikomponenten-Spritzgussverfahren verzichtet werden kann.

In einer weiteren Weiterbildung der Erfindung ist vorgesehen, dass die Kanalwand des Kanals wenigstens bereichsweise aus elektrisch leitfähigem Kunststoff gebildet ist. Dadurch wird vorteilhaft bewirkt, dass sich Partikel, Schmutzpartikel und/oder Öltröpfchen, welche sich im strömenden fluiden Medium befinden, bereits vor dem Eintritt in das Kanalstück in einer Art Faradayschen Käfig befinden und auf diese Weise eine elektrische Polarisierung bzw. eine elektrische Aufladung vermieden wird beziehungsweise bei Stoßkontakten zwischen elektrisch geladenen oder polarisierten Partikeln mit der Kanalwand des Kanals die Partikel elektrisch umgeladen bzw. elektrisch neutralisiert werden, bevor sie in das Kanalstück einströmen.

Dadurch, dass das Sensorgehäuse wenigstens bereichsweise aus elektrisch leitfähigem Kunststoff gebildet ist, insbesondere in dem Bereich, in dem das dem fluiden Medium aussetzbare Sensorelement angeordnet ist, wird vorteilhaft bewirkt, dass zeitlich und räumlich gesehen einer elektrischen Aufladung von Partikeln bzw. einer elektrischen Polarisation von Partikeln auch unmittelbar vor dem Vorbeiströmen derartiger Partikel am Sensorelement entgegengewirkt wird und so das Risiko, einer elektrostatisch induzierten Ablagerung derartiger Partikel auf dem Sensorelement stark verringert wird.

Dadurch, dass der elektrisch leitfähige Kunststoff einen Oberflächenwiderstand von weniger als 10¹² Ω (Ohm) aufweist, wird vorteilhaft bewirkt, dass die aus diesem elektrisch leitfähigen Kunststoff gebildete Kanalstückwand an ihrer Innenseite und an ihrer Außenwand zuverlässig auf ein und demselben festen Potenzial (POT, GND) liegt. Dadurch wird vorteilhaft besonders zuverlässig der Effekt einer elektrischen Abschirmung in der Art eines Faradayschen Käfigs im Innenraum des Kanalstücks bewirkt.

In einer Weiterbildung der Erfindung ist das wenigstens eine Kontaktierelement als eine Schraube ausgebildet, wobei die Schraube zur elektrischen Kontaktierung der Kanalstückwand und/oder des Kanals in die Kanalstückwand und/oder in den Kanal eingeschraubt ist. Dadurch wird vorteilhaft bewirkt, dass das wenigstens eine Kontaktierelement besonders kostengünstig herstellbar ist und dass durch das Einschrauben eine besonders zuverlässige und haltbare mechanische und elektrische Kontaktierung des wenigstens einen Kontaktierelements mit der Kanalstückwand bzw. dem Kanal bewirkt ist. Besonders vorteilhaft wird dadurch dauerhaft auch ein besonders geringer elektrischer Übergangswiderstand zwischen dem wenigstens einen Kontaktierelement und der Kanalstückwand und/oder der Kanalwand bewirkt.

Dadurch, dass das wenigstens eine Kontaktierelement in der die Einführöffnung begrenzenden Wandung der Kanalstückwand angeordnet ist und dass das wenigstens eine Kontaktierelement bei im Kanalstück eingeführtem Sensorgehäuse durch wenigstens einen am Sensorgehäuse angeordneten Potenzial-Steckkontakt elektrisch kontaktiert ist, wird vorteilhaft bewirkt, dass das wenigstens eine Kontaktierelement auf besonders einfache Weise sicher und zuverlässig elektrisch und mechanisch kontaktiert ist und dass dadurch die Kanalstückwand besonders zuverlässig auf das feste elektrische Potenzial (POT, GND) gelegt ist. Weiterhin vorteilhaft an einer derartigen Ausführungsform ist, dass durch das derart angeordnete wenigstens eine Kontaktierelement dieses wenigstens eine Kontaktierelement nicht nach außen oder in den Innenraum des Kanalstücks abragt, wodurch beispielsweise eine Beschädigung des Kontaktierelements und/oder der Kanalstückwand beim Fertigungsprozess oder beim Transport vermieden wird.

Ausführungsformen der Erfindung sind in den Zeichnungen dargestellt und werden in der nachfolgenden Beschreibung näher erläutert.

### Kurze Beschreibung der Zeichnungen

Es zeigen:
Fig. 1a eine perspektivische Ansicht einer ersten Ausführungsform einer erfindungsgemäßen Sensorvorrichtung;
Fig. 1b einen Querschnitt durch eine Ausführungsform des Sensors aus Fig. 1a;
Fig. 2 einen perspektivischen Querschnitt durch eine zweite Ausführungsform der erfindungsgemäßen Sensorvorrichtung;
Fig. 3 einen Querschnitt durch eine dritte Ausführungsform der erfindungsgemäßen Sensorvorrichtung.

### Ausführungsformen der Erfindung

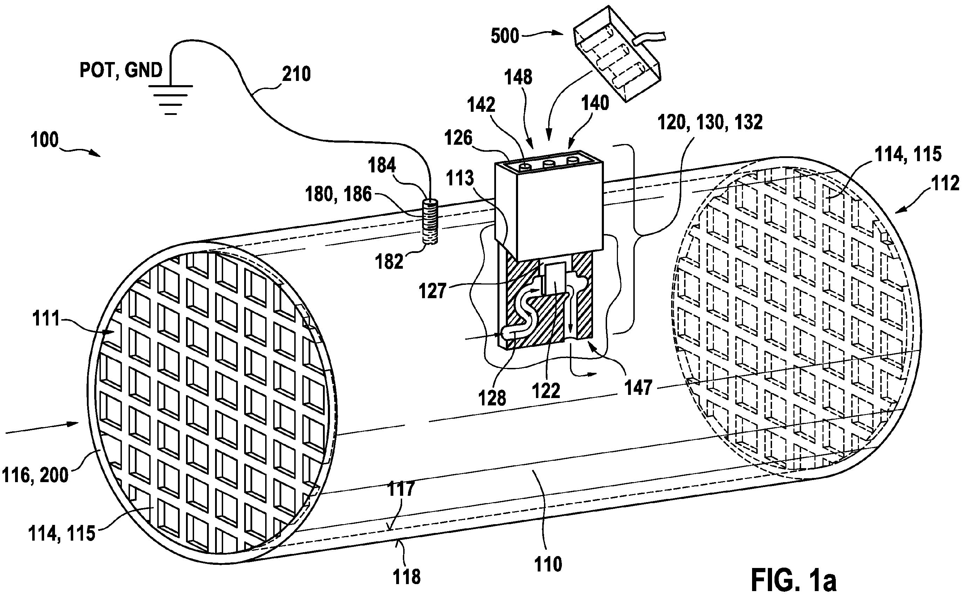

In Fig. 1a ist eine erste Ausführungsform einer erfindungsgemäßen Sensorvorrichtung 100 zur Erfassung wenigstens einer Eigenschaft eines in einem Kanal strömenden fluiden Mediums dargestellt. Die Sensorvorrichtung 100 umfasst ein von dem fluiden Medium durchströmbares Kanalstück 110 in der Art eines Strömungsrohres. Das Kanalstück 110 umfasst an seinen beiden offenen, in der axialen Erstreckungsrichtung angeordneten, Enden einen Einlass 111 und einen Auslass 112 für das in axialer Richtung entlang des in der Figur dargestellten Pfeils strömende fluide Medium. Das rohrartige Kanalstück 110 umfasst weiterhin eine Kanalstückwand 116, welche eine den Einlass 111 und den Auslass 112 verbindende Innenwandung 117 und eine Außenseite 118 aufweist. Das Kanalstück 110 mit seiner gesamten Kanalstückwand 116 ist vollständig aus elektrisch leitfähigem Kunststoff 200 gebildet.

Als fluides Medium werden im Sinne dieser Anmeldung gasförmige und/oder flüssige Medien beziehungsweise Chemikalien aller Art verstanden. Beispielsweise Luft, Abgase, Wasser, Harnstoff-Wasserlösung, Kraftstoffe, Kältemittel, Öle, Wasserdampf, Stickstoff, Sauerstoff, Wasserstoff, Methan, Propan, Butan, etc., deren Massenstrom bestimmt werden kann. Grundsätzlich kann mit der erfindungsgemäßen Sensorvorrichtung 100 der Massenstrom eines jeden fluiden Mediums bestimmt werden. Gleichfalls kann mit der erfindungsgemäßen Sensorvorrichtung 100 auch eine andere Eigenschaft des fluiden Mediums, beispielsweise der Absolutdruck des fluiden Mediums oder ein Differenzdruck als Differenz von Absolutdrücken, von denen wenigstens einer dem fluiden Medium zuzurechnen ist, bestimmt werden.

Das Material des elektrisch leitfähigen Kunststoffes 200 besteht aus einer im Reinzustand elektrisch isolierenden Kunststoffmatrix, welcher elektrisch leitfähige Füllstoffe zur Herstellung eines elektrisch leitfähigen Kunststoffes beigemischt werden. Als Füllstoffe kommen z.B. Metallpulver, Ruß, Kohlefasern, Metallfasern, Lötlegierungen, sogenannte Carbon-Nanotubes oder andere Nanopartikel in Betracht. Der Füllgrad muss ein gewisses Mindestmaß überschreiten, um eine hinreichende Anzahl von elektrisch leitfähigen Pfaden innerhalb des Materialverbundes aus der Kunststoffmatrix und den Füllstoffen auszubilden. Ab dieser sogenannten Perkulationsgrenze ist der elektrische Widerstand nicht mehr unendlich groß und die elektrische Leitfähigkeit nimmt zu.

Bevorzugt erreicht ein derartiger Verbundwerkstoff einen spezifischen elektrischen Durchgangswiderstand von unter 10⁶ Ωcm (1.000.000 Ohm-Zentimeter), bevorzugt von weniger als 1000 Ωcm oder weniger als 500 Ωcm, ganz besonders bevorzugt von weniger als 100 Ωcm. Für den Abschirmeffekt elektrischer oder elektromagnetischer Felder im Inneren des Kanalstücks 110 in der Art eines Faradayschen Käfigs ist in besonderer Weise der spezifische elektrische Durchgangswiderstand des Materials des Kanalstücks 110 und der Kanalstückwand 116 entscheidend. Ebenso, dass die gesamte Kanalstückwand 116 aus dem elektrisch leitfähigen Material besteht. Zur Erreichung dieses spezifischen elektrischen Durchgangswiderstands enthält der Verbundwerkstoff beispielsweise zwischen 0,1 bis 70 Vol-% elektrisch leitender Füllstoffe.

In einer bevorzugten Ausführungsform erreicht ein derartiger Verbundwerkstoff einen spezifischen elektrischen Oberflächenwiderstand von unter 10¹² Ω (10 hoch 12 Ohm), bevorzugt liegt der spezifische Oberflächenwiderstand in einem Bereich von 10² Ohm bis 10¹¹ Ohm, ganz besonders bevorzugt liegt der spezifische Oberflächenwiderstand in einem Bereich von 100 Ohm bis 10000 Ohm (10² Ohm bis 10⁴ Ohm). In einem weiteren bevorzugten Bereich von 10⁶ Ohm bis 10¹¹ Ohm des spezifischen Oberflächenwiderstands weist der spezifische Oberflächenwiderstand sogenannte elektrisch dissipative Eigenschaften auf.

Die Definition des spezifischen elektrisch Durchgangswiderstands und des spezifischen elektrischen Oberflächenwiderstands sowie Messverfahren für diese beiden Werte ist ausführlich beschrieben in der Norm DIN IEC 60093 in der Ausgabe von Dezember 1993 (Klassifikation VDE 0303, Teil 30).

Am Einlass 111 des Kanalstücks 110 ist in der dargestellten Ausführungsform der Erfindung ein aus sich kreuzenden Streben gebildetes Kanalgitter 114 angeordnet, welches groben Schmutz vom Innern des Kanalstücks 110 abhält und die Strömung des fluiden Mediums im Innern des Kanalstücks 100 beeinflusst. Das Kanalgitter 114 ist bevorzugt als ein elektrisch leitfähiges Kanalgitter 115 ausgebildet, beispielsweise durch die Verwendung von metallischen Streben oder von Streben, welche aus einem elektrisch leitfähigen Kunststoff 200 gefertigt sind. Auch eine Ausbildung als metallisches, elektrisch leitfähiges Kanalgitter 115 ist möglich. Ebenso kann am Auslass 112 ein derartiges Kanalgitter 114, bevorzugt als elektrisch leitfähiges Kanalgitter 115, angeordnet sein. Bevorzugt ist das Kanalgitter 114 am Einlass 111 bzw. am Auslass 112 auch elektrisch mit der Kanalstückwand 116 verbunden und liegt auf demselben elektrischen Potenzial wie die Kanalstückwand 116.

Das Kanalstück 110 weist radial an seiner Außenseite 118 weiterhin eine Einführöffnung 113 auf, welche zum Einführen oder Einstecken eines Sensors 120, welcher ebenfalls Bestandteil der Sensorvorrichtung ist, in das Kanalstück 110 geeignet ist. Bei diesem Sensor 120 kann es sich beispielsweise um einen Luftmassensensor 130 oder um einen Drucksensor 132 handeln oder um einen beliebigen anderen Sensor, der geeignet ist wenigstens eine Eigenschaft eines strömenden fluiden Mediums zu erfassen. Der Sensor 120 wird bevorzugt in radialer Richtung in das Kanalstück 110 eingeführt.

Das Kanalstück 110 weist weiterhin wenigstens ein elektrisch leitfähiges Kontaktierelement 180 mit einem ersten Ende 182 und einem vom ersten Ende 182 abgewandten zweiten Ende 184 auf. Das Kontaktierelement 180 ist an der Kanalstückwand 116 mechanisch festgelegt, beispielsweise mit seinem ersten Ende 182, und elektrisch mit der Kanalstückwand 116 verbunden. Die Kontaktflächen und das Material des wenigstens einen Kontaktierelements 180 sind bevorzugt derartig ausgebildet, dass der elektrische Übergangswiderstand zwischen dem wenigstens einen Kontaktierelement 180 und der Kanalstückwand 116 dauerhaft möglichst gering ist. Das wenigstens eine Kontaktierelement 180 ist zur Festlegung an der Kanalstückwand 116 beispielsweise als Schraube 186 ausgebildet, wobei das wenigstens eine Kontaktierelement 180,186 an seinem ersten Ende 182 ein Schraubgewinde aufweist, mit welchem das Kontaktierelement 180,186 in die Kanalstückwand 116 eingeschraubt ist. Über eine elektrische Leitung 210 ist das zweite Ende 184 des wenigstens einen Kontaktierelements 180 mit einem außerhalb des Kanalstücks 110 befindlichen festen elektrischen Potenzial (POT), bevorzugt dem Massepotenzial (GND), elektrisch verbunden. Wegen des aus elektrisch leitfähigem Kunststoff 200 gefertigten Kanalstücks 110 ist somit sichergestellt, dass die gesamte Kanalstückwand 116 sowie elektrisch leitfähige Kanalgitter 115 am Einlass 111 und am Auslass 112 elektrisch auf dem festen elektrischen Potenzial (POT), insbesondere dem Massepotenzial (GND) liegen. Durch diese Konstruktion ist im Innern des Kanalstücks 110 eine Art Faradayscher Käfig geschaffen, durch den das strömende fluide Medium mitsamt gegebenenfalls darin enthaltener Partikel strömt.

In radialer Richtung ist durch die Einführöffnung 113 in der dargestellten Ausführungsform der Erfindung ein Sensor 120 in das Kanalstück 110 eingesteckt. Der Sensor 120 ist beispielsweise ein Luftmassensensor 130 oder ein Drucksensor 132. Der Sensor 120 weist ein Sensorgehäuse 126 auf, in welchem ein Trägersubstrat 127 angeordnet ist. Das Trägersubstrat 127 ist beispielsweise als Leiterbahnen aufweisende Leiterplatte (PCB) oder als Keramikträgersubstrat ausgebildet. Das Sensorgehäuse 126 des Sensors 120 weist weiterhin an seinem ins Innere des Kanalstücks 110 ragenden ersten Sensorende 147 einen Strömungskanal 128 auf, der durch eine der Strömungsrichtung im Kanalstück 110 zuweisende Öffnung dem strömenden fluiden Medium ausgesetzt ist. Der Strömungskanal 128 ist bevorzugt kurvenartig im Sensorgehäuse 126 eingebracht und wird entlang der im Strömungskanal 128 angedeuteten Pfeile von dem fluiden Medium durchströmt. Der Sensor 120 weist weiterhin ein Sensorelement 122 auf, welches auf dem Trägersubstrat 127 angeordnet ist und in den Strömungskanal 128 hineinragt. Das Sensorelement 122 dient zur Erfassung der wenigstens einen Eigenschaft des strömenden fluiden Mediums. Das Sensorelement 122 ist mittelbar oder unmittelbar elektrisch mit Steckkontakten 142 verbunden, welche an einem Steckerelement 140 des Sensorgehäuses 126 angeordnet sind. Das Steckerelement 140 ist an einem bezüglich des Kanalstücks 110 nach außen ragenden und vom ersten Sensorende 147 abgewandten zweiten Sensorende 148 des Sensorgehäuses 126 angeordnet und kann mittels eines Gegensteckers 500 elektrisch kontaktiert werden.

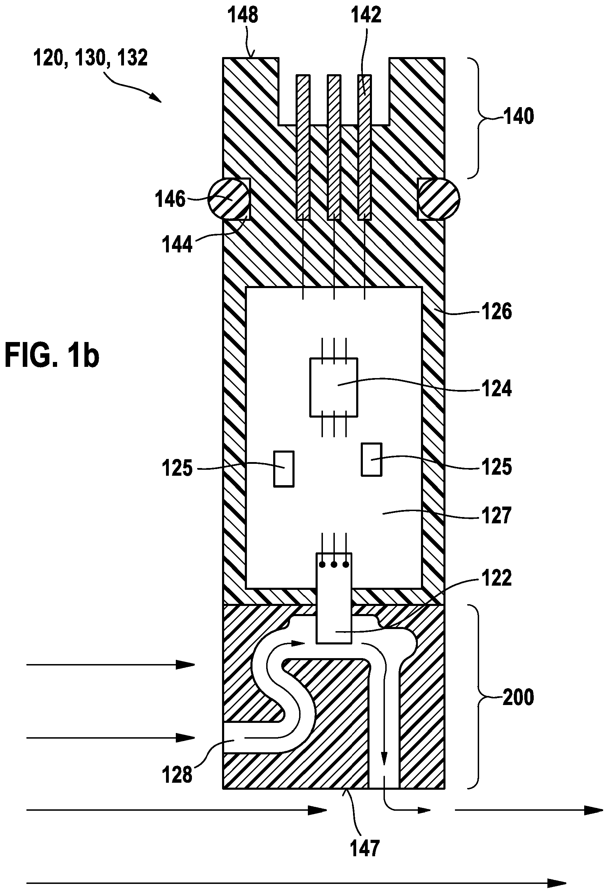

In der Fig. 1b ist der in Fig. 1a dargestellte Sensor 120 detaillierter dargestellt. Gleiche Bezugszeichen stellen dabei dieselben Merkmale dar. Das Sensorgehäuse 126 des Sensors 120 weist benachbart zu dem als Steckerelement 140 ausgebildeten zweiten Sensorende 148 eine Ausnehmung 144 auf, in welche ein Dichtelement 146, beispielsweise ein handelsüblicher O-Ring, montiert ist. Mittels der Ausnehmung 144 und des Dichtelements 146 lässt sich das Sensorgehäuse 126 sicher und bevorzugt fluiddicht in dem Kanalstück 110 festlegen, beispielsweise durch Verrasten in der Einführöffnung 113. Das auf dem Trägersubstrat 127 angeordnete Sensorelement 122 ist mittels elektrischer Verbindungselemente mit dem Trägersubstrat 127 elektrisch verbunden. Auf dem Trägersubstrat 127 befinden sich elektronische Bauelemente 124, beispielsweise in Form von anwenderspezifischen integrierten Schaltkreisen (ASIC), und passive elektrische Bauelemente 125, beispielsweise in Form von Widerständen, Kondensatoren oder Spulen. Das Trägersubstrat 127 selber ist, zum Beispiel mittels elektrischer Verbindungselemente, beispielsweise Bonddrähten, mit den Steckkontakten 142 des Steckerelements 140 elektrisch verbunden.

Der am ersten Sensorende 147 angeordnete Strömungskanal 128 wird von dem in Fig. 1b von links nach rechts in Pfeilrichtung strömenden fluiden Medium serpentinenartig durchströmt. Dabei befindet sich eine Eintrittsöffnung des Strömungskanals 128 an der der Strömung zugewandten linken Seite des Sensorgehäuses 126, während eine Austrittsöffnung des Strömungskanals 128 sich an der in der Fig. 1b nach unten weisenden Seite des Sensorgehäuses befindet. Eintrittsöffnung und Austrittsöffnung des Strömungskanals 128 sowie die Form des Strömungskanals 128 können an die gewünschte Zielsetzung des Sensors angepasst werden, wobei auch andere Ausführungsformen der Form des Strömungskanals 128 und der Lage seiner Eintrittsöffnung und seiner Austrittsöffnung, als in Fig. 1b dargestellt, möglich sind.

Das Sensorgehäuse 126 ist bevorzugt aus einem nicht leitenden Kunststoff, beispielsweise Polybutylenterephthalat (PBT), ausgebildet. Zur Verringerung des Risikos einer elektrostatisch induzierten Ablagerung von Partikeln auf dem Sensorelement 122 können jedoch in einer bevorzugten Ausführungsform das erste Sensorende 147 oder auch nur Teile des Strömungskanals 128 aus einem elektrisch leitfähigen Kunststoff 200 gebildet sein, so dass sich der Effekt des Faradayschen Käfigs auch auf eine unmittelbare Umgebung des Sensorelements 122 erstreckt. In einer derartigen Ausführung ist das im Sensor 120 befindliche Sensorelement 122 besonders zuverlässig gegen die aufgrund von elektrostatischer Aufladung verstärkte Ablagerung von Partikeln geschützt, die sich im strömenden Medium befinden.

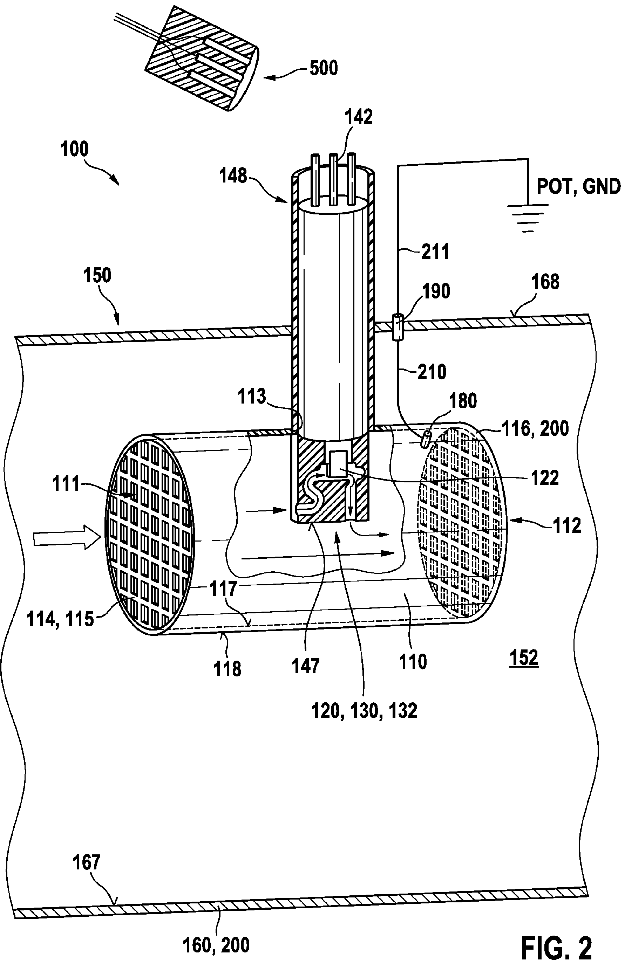

In Fig. 2 ist eine weitere Ausführungsform der Erfindung dargestellt. In dieser Ausführungsform der erfindungsgemäßen Sensorvorrichtung 100 ist das Kanalstück 110 in einem Innenraum 152 eines Kanals 150 angeordnet. Der Kanal 150 weist eine Kanalwand 160 mit einer Kanal-Innenwandung 167 und einer Kanal-Außenseite 168 auf. Das strömende fluide Medium durchströmt den rohrartigen Kanal 150 in einer axialen Richtung entlang der in der Fig. 2 dargestellten Pfeile. Teile des strömenden fluiden Mediums gelangen durch den Einlass 111 des Kanalstücks 110 ins Innere des Kanalstücks 110. Dort wird mittels des durch die Kanalwand 160 und die Einführöffnung 113 des Kanalstücks 110 eingeführten Sensors 120 mit seinem Sensorelement 122 die wenigstens eine Eigenschaft des strömenden fluiden Mediums, beispielsweise ein Druck, eine Temperatur oder eine Luftmasse, bestimmt.

Die Kanalwand 160 kann aus einem elektrisch isolierenden Material oder aber aus einem elektrisch leitfähigen Material, beispielsweise einem elektrisch leitfähigen Kunststoff 200 hergestellt sein. Der Anschluss des Kanalstücks 110 und seiner Kanalstückwand 116 an das feste elektrische Potenzial (POT), insbesondere das Massepotenzial (GND), ist über das wenigstens eine elektrische Kontaktierelement 180 an der Kanalstückwand 116, die elektrische Leitung 210, ein in der Kanalwand 160 des Kanals 150 angeordnetes weiteres elektrisches Kontaktierelement 190 und eine weitere elektrische Leitung 211 hergestellt. Das weitere elektrische Kontaktierelement 190 ist bevorzugt als elektrische Durchführung durch die Kanalwand 160 ausgelegt und geeignet, eine aus elektrisch leitfähigem Kunststoff 200 ausgebildete Kanalwand 160 ebenfalls auf das feste elektrische Potenzial (POT), insbesondere das Massepotenzial (GND), zu legen. Weiterhin ist das weitere elektrische Kontaktierelement 190 dafür geeignet, dass an seiner Seite, die der Außenseite 168 des Kanals 150 zuweist, die weitere elektrische Leitung 211 elektrisch kontaktiert und mechanisch festgelegt wird. Außerdem kann an der den Innenraum 152 des Kanals 150 zuweisenden Seite des weiteren Kontaktierelements 190 die elektrische Leitung 210 elektrisch kontaktiert und mechanisch festgelegt werden.

Der Sensor 120 ragt in dieser Ausführungsform der Erfindung mit seinem ersten Sensorende 147 in radialer Richtung in das Kanalstück 110 hinein, während sein am zweiten Sensorende 148 ausgebildetes Steckerelement 140 mit den Steckkontakten 142 aus der Kanal-Außenseite 168 herausragt und mittels eines Gegensteckers 500 elektrisch kontaktierbar ist.

Das Kanalstück 110 und/oder der Kanal 150 können beispielsweise spritzgegossen oder extrudiert werden. Um elektrisch isolierende Bereiche, beispielsweise im Kanal 150, auszubilden bieten sich Mehrkomponenten-Spritzgießverfahren und/oder Kunststoff-Schweißverfahren an. Hierdurch lassen sich fluid- und druckdichte Werkstücke fertigen, die neben dem elektrisch leitfähigen Kunststoff auch isolierende Kunststoffe oder andere elektrische Isolationsmaterialien (Isolatoren) und Werkstoffe beziehungsweise elektrische Bauteile, beispielsweise elektrisch leitfähige Kontaktierelemente 180, 190, beinhalten können.

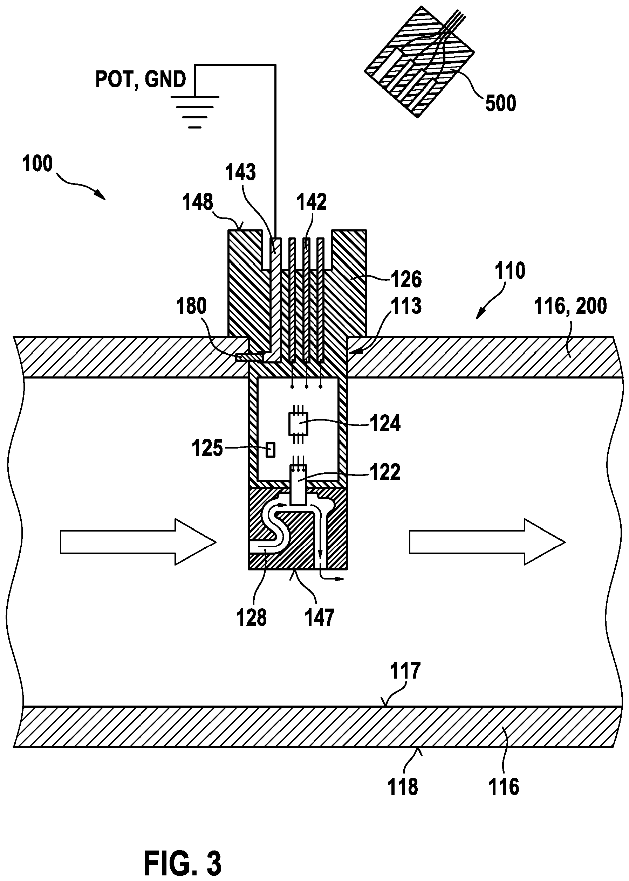

Fig. 3 stellt eine dritte Ausführungsform der erfindungsgemäßen Sensorvorrichtung 100 dar. In dieser Ausführungsform ist das wenigstens eine elektrische Kontaktierelement 180 nicht an der Außenseite 118 und auch nicht an der Innenwandung 117 der Kanalstückwand 116 angeordnet, sondern in der die Einführöffnung 113 begrenzenden Wandung der Kanalstückwand 116. Auf diese Weise ragt das wenigstens eine elektrische Kontaktierelement 180 nicht mehr in radialer Richtung von der Kanalstückwand 116 nach außen oder ins Innere des Kanals 150 ab, sondern ragt gewissermaßen in axialer Richtung aus der die Einführöffnung 113 begrenzenden Wandung in die Einführöffnung 113 hinein. Auf diese Weise ist das elektrische Kontaktierelement 180 besonders einfach mit einem Potenzial-Steckkontakt 143 des Sensors 120 verbindbar. Der Potenzial-Steckkontakt 143 ist beispielsweise mit einem Ende im Steckerelement 140 des Sensors 120 von einem Gegenstecker 500 kontaktierbar und ist an einem anderen Ende durch die Wand des Sensorgehäuses 126 derart hindurchgeführt, dass er beim Einführen des Sensors 120 in die Einführöffnung 113 in elektrischen Kontakt mit dem wenigstens einen elektrischen Kontaktierelement 180 gelangt. Das elektrische Kontaktierelement 180 kann auch als eine elektrisch leitfähige Beschichtung ausgebildet sein, die auf einen größeren Bereich der die Einführöffnung 113 begrenzenden Wandung oder sogar auf die gesamte, die Einführöffnung 113 begrenzende Wandung aufgebracht ist. Eine derartige elektrisch leitfähige Beschichtung kann beispielsweise durch eine Bedampfung oder einen galvanischen Prozess hergestellt werden. Als Materialien für solche eine Beschichtung eignen sich bevorzugt metallische Werkstoffe, bevorzugt Kupfer, Silber oder Gold. Eine derartige über einen größeren Bereich der die Einführöffnung 113 begrenzenden Wandung bedeckenden und als das wenigstens eine Kontaktierelement 180 fungierende Beschichtung ermöglicht eine besonders einfache und sichere Kontaktierung mit einem im Sensorgehäuse 126 angeordneten Potenzial-Steckkontakt 143. Der dazu passende Potenzial-Steckkontakt 143 ist in seinem Kontaktbereich mit dem wenigstens einen Kontaktierelement 180 beispielsweise durch eine hier nicht dargestellte, das Sensorgehäuse 126 ringförmig umfassende elektrisch leitfähige Kontaktelektrode ausgebildet. Dadurch ergibt sich eine besonders einfache Montage mit einer besonders zuverlässigen Kontaktierung, eine besonders einfache Fertigung des Sensorgehäuses 126 und wegen der großen Kontaktierfläche ein besonders geringer elektrischer Übergangswiderstand zwischen dem wenigstens einen Kontaktierelement 180 und dem Potenzial-Steckkontakt 143.

## Patentansprüche

1. Sensorvorrichtung zur Erfassung wenigstens einer Eigenschaft eines in einem Kanal (150) strömenden fluiden Mediums umfassend ein von einem fluiden Medium durchströmbares Kanalstück (110) mit einem Einlass (111) und mit einem Auslass (112) und mit einer Kanalstückwand (116), welche eine den Einlass (111) und den Auslass (112) verbindende Innenwandung (117) und eine Außenseite (118) aufweist und mit einer in der Kanalstückwand (116) angeordneten Einführöffnung (113), wobei das Kanalstück (110) Bereiche mit elektrischer Leitfähigkeit aufweist, wobei die Sensorvorrichtung weiterhin wenigstens einen Sensor (120) mit einem Sensorgehäuse (126) und einem im Sensorgehäuse (126) angeordneten Sensorelement (122) umfasst, wobei das Sensorgehäuse (126) durch die in der Kanalstückwand (116) angeordnete Einführöffnung (113) in das Kanalstück (110) einführbar ist und wobei das Sensorelement (122) dem strömenden fluiden Medium aussetzbar ist, wobei das Sensorelement (122) geeignet ist, wenigstens eine Eigenschaft des strömenden fluiden Mediums zu erfassen, wobei das Sensorgehäuse (126) des Sensors (120) an einem ins Innere des Kanalstücks (110) ragenden Sensorende (120) einen Strömungskanal (128) aufweist, der durch eine der Strömungsrichtung im Kanalstück (110) zuweisende Öffnung dem strömenden Medium ausgesetzt ist, und wobei das Sensorelement (122) auf einem in dem Sensorgehäuse angeordneten Trägersubstrat (127) angeordnet ist und in den Strömungskanal (128) hineinragt, wobei die Bereiche mit elektrischer Leitfähigkeit mit einem festen elektrischen Potenzial (POT) derart verbindbar sind, dass die Bereiche auf einem festen elektrischen Potenzial liegen, **dadurch gekennzeichnet, dass**
die gesamte Kanalstückwand (116) des Kanalstücks (110) vollständig aus elektrisch leitfähigem Kunststoff (200) gebildet ist, wobei an der Außenseite (118) des Kanalstücks (110) oder in der Wandung der Kanalstückwand (116) wenigstens ein elektrisch leitfähiges Kontaktierelement (180) zur elektrischen Kontaktierung der Kanalstückwand (116) angeordnet ist, wobei das wenigstens eine Kontaktierelement (180) mit einem festen elektrischen Potenzial (POT) außerhalb des Kanalstücks (110), insbesondere dem Massepotenzial (GND), derart verbindbar ist, dass die gesamte Kanalstückwand (116) auf dem festen elektrischen Potenzial (POT, GND) liegt.

2. Sensorvorrichtung nach Anspruch 1, **dadurch gekennzeichnet, dass** das Kanalstück (110) in dem von dem fluiden Medium durchströmten Kanal (150) angeordnet ist, wobei der Kanal (150) einen Kanalinnenraum (152) und eine Kanalwand (160) aufweist, wobei zumindest Teile des den Kanal (150) durchströmenden fluiden Mediums das Kanalstück (110) durchströmen, wobei das Sensorgehäuse (126) durch den Kanal (150) und die Einführöffnung (113) hindurch derart in das Kanalstück (110) eingeführt ist, dass das Sensorelement (122) dem in dem Kanalstück (110) strömenden fluiden Medium ausgesetzt ist.

3. Sensorvorrichtung nach Anspruch 2, **dadurch gekennzeichnet, dass** die Kanalwand (160) des Kanals (150) wenigstens bereichsweise aus elektrisch leitfähigem Kunststoff (200) gebildet ist.

4. Sensorvorrichtung nach Anspruch 1, **dadurch gekennzeichnet, dass** das Sensorgehäuse (126) wenigstens bereichsweise aus elektrisch leitfähigem Kunststoff (200) gebildet ist, insbesondere in dem Bereich, in dem das dem fluiden Medium aussetzbare Sensorelement (122) angeordnet ist.

5. Sensorvorrichtung nach Anspruch 1, **dadurch gekennzeichnet, dass** der elektrisch leitfähige Kunststoff (200) einen spezifischen elektrischen Durchgangswiderstand von weniger als 10⁶ Ωcm (Ohm-Zentimeter) aufweist.

6. Sensorvorrichtung nach Anspruch 1 oder 2, **dadurch gekennzeichnet, dass** das wenigstens eine Kontaktierelement (180) als eine Schraube (186) ausgebildet ist, wobei die Schraube zur elektrischen Kontaktierung der Kanalstückwand (116) und/oder der Kanalwand (160) in die Kanalstückwand (116) und/oder in die Kanalwand (160) eingeschraubt ist.

7. Sensorvorrichtung nach Anspruch 1, **dadurch gekennzeichnet, dass** das wenigstens eine Kontaktierelement (180) in der die Einführöffnung (113) begrenzenden Wandung der Kanalstückwand (116) angeordnet ist.

8. Sensorvorrichtung nach Anspruch 7, **dadurch gekennzeichnet, dass** das wenigstens eine Kontaktierelement (180) bei im Kanalstück (110) eingeführten Sensorgehäuse (126) durch wenigstens einen am Sensorgehäuse (126) angeordneten Potenzial-Steckkontakt (143) elektrisch kontaktiert ist.

## Claims

1. Sensor device for measuring at least one intrinsic property of a fluid which flows in a duct (150), comprising a duct element (110) through which a fluid can flow, said duct element (110) having an inlet (111) and having an outlet (112) and having a duct element wall (116) which has an inner wall (117) connecting the inlet (111) and the outlet (112), and an outer side (118), and having an insertion opening (113) which is arranged in the duct element wall (116), wherein the duct element (110) has areas with electrical conductivity, wherein the sensor device also comprises at least one sensor (120) with a sensor housing (126) and a sensor element (122) which is arranged in the sensor housing (126), wherein the sensor housing (126) can be introduced into the duct element (110) through the insertion opening (113) which is arranged in the duct element wall (116), and wherein the sensor element (122) can be subjected to the flowing fluid, wherein the sensor element (122) is suitable for sensing at least one property of the flowing fluid, wherein the sensor housing (126) of the sensor (120) has a flow duct (128) at a sensor end (120) which projects into the interior of the duct element (110), which flow duct (128) is subjected to the flowing medium through an opening pointing in the flow direction in the duct element (110), and wherein the sensor element (122) is arranged on a carrier substrate (127) which is arranged in the sensor housing, and said sensor element (122) projects into the flow duct (128), wherein the areas with electrical conductivity can be connected to a fixed electrical potential (POT) in such a way that the areas are at a fixed electrical potential,
**characterized in that**
the entire duct element wall (116) of the duct element (110) is formed completely from electrically conductive plastic (200), wherein at least one electrically conductive contact-forming element (180) for making electrical contact with the duct element wall (116) is arranged on the outer side (118) of the duct element (110) or in the wall of the duct element wall (116), wherein the at least one contact-forming element (180) can be connected to a fixed electrical potential (POT) outside the duct element (110), in particular to the earth potential (GND), in such a way that the entire duct element wall (116) is at the fixed electrical potential (POT, GND).

2. Sensor device according to Claim 1, **characterized in that** the duct element (110) is arranged in the duct (150) through which the fluid flows, wherein the duct (150) has a duct interior (152) and a duct wall (160), wherein at least parts of the fluid which flow through the duct (150) flow through the duct element (110), wherein the sensor housing (126) is introduced into the duct element (110) through the duct (150) and the insertion opening (113) in such a way that the sensor element (122) is subjected to the fluid flowing in the duct element (110).

3. Sensor device according to Claim 2, **characterized in that** the duct wall (160) of the duct (150) is formed at least in certain areas from electrically conductive plastic (200).

4. Sensor device according to Claim 1, **characterized in that** the sensor housing (126) is formed at least in certain areas from electrically conductive plastic (200), in particular in the area in which the sensor element (122) which can be subjected to the fluid is arranged.

5. Sensor device according to Claim 1, **characterized in that** the electrically conductive plastic (200) has a specific electrical contact resistance of less than 10⁶ Qcm (ohm-centimetres).

6. Sensor device according to Claim 1 or 2, **characterized in that** the at least one contact-forming element (180) is embodied as a screw (186), wherein in order to make electrical contact with the duct element wall (116) and/or the duct wall (160) the screw is screwed into the duct element wall (116) and/or into the duct wall (160).

7. Sensor device according to Claim 1, **characterized in that** the at least one contact-forming element (180) is arranged in the wall of the duct element wall (116) which bounds the insertion opening (113).

8. Sensor device according to Claim 7, **characterized in that** when the sensor housing (126) is introduced into the duct element (110), at least one potential plug-in contact (143) which is arranged on the sensor housing (126) makes electrical contact with the at least one contact-forming element (180).

## Revendications

1. Dispositif de capteur permettant de détecter au moins une propriété d'un milieu fluide s'écoulant dans un canal (150), comprenant un tronçon de canal (110) à travers lequel peut s'écouler un milieu fluide, doté d'une entrée (111) et d'une sortie (112) et d'une paroi de tronçon de canal (116) qui présente une cloison intérieure (117) reliant l'entrée (111) et la sortie (112) et une face extérieure (118), et d'une ouverture d'introduction (113) disposée dans la paroi de tronçon de canal (116), le tronçon de canal (110) présentant des zones à conductivité électrique, le dispositif de capteur comprenant en outre au moins un capteur (120) doté d'un boîtier de capteur (126) et d'un élément de capteur (122) disposé dans le boîtier de capteur (126), le boîtier de capteur (126) pouvant être introduit dans le tronçon de canal (110) à travers l'ouverture d'introduction (113) disposée dans la paroi de tronçon de canal (116), et l'élément de capteur (122) pouvant être exposé au milieu fluide qui s'écoule, l'élément de capteur (122) étant adapté pour détecter au moins une propriété du milieu fluide qui s'écoule, le boîtier de capteur (126) du capteur (120) présentant à une extrémité de capteur (120) faisant saillie à l'intérieur du tronçon de canal (110) un canal d'écoulement (128) qui est exposé au milieu qui s'écoule par une ouverture tournée, vers la direction d'écoulement, dans le tronçon de canal (110), et l'élément de capteur (122) étant disposé sur un substrat de support (127) disposé dans le boîtier de capteur et faisant saillie dans le canal d'écoulement (128), les zones à conductivité électrique pouvant être reliées à un potentiel électrique fixe (POT) de telle sorte que les zones se trouvent à un potentiel électrique fixe,
**caractérisé en ce que** toute la paroi de tronçon de canal (116) du tronçon de canal (110) est formée entièrement à partir d'une matière plastique électriquement conductrice (200), dans lequel, sur la face extérieure (118) du tronçon de canal (110) ou dans la cloison de la paroi de tronçon de canal (116), au moins un élément de mise en contact électriquement conducteur (180) est disposé pour la mise en contact électrique de la paroi de tronçon de canal (116), ledit au moins un élément de mise en contact (180) pouvant être relié à un potentiel électrique fixe (POT) à l'extérieur du tronçon de canal (110), en particulier à un potentiel de terre (GND), de telle sorte que toute la paroi de tronçon de canal (116) se trouve au potentiel électrique fixe (POT, GND).

2. Dispositif de capteur selon la revendication 1, **caractérisé en ce que** le tronçon de canal (110) est disposé dans le canal (150) par lequel s'écoule le milieu fluide, le canal (150) présentant un espace intérieur de canal (152) et une paroi de canal (160), au moins des parties du milieu fluide qui s'écoule par le canal (150) s'écoulant par le tronçon de canal (110), le boîtier de capteur (126) étant introduit dans le tronçon de canal (110) à travers le canal (150) et l'ouverture d'introduction (113) de telle sorte que l'élément de capteur (122) est exposé au milieu fluide qui s'écoule dans le tronçon de canal (110).

3. Dispositif de capteur selon la revendication 2, **caractérisé en ce que** la paroi de canal (160) du canal (150) est formée au moins par endroits en matière plastique électriquement conductrice (200).

4. Dispositif de capteur selon la revendication 1, **caractérisé en ce que** le boîtier de capteur (126) est formé au moins par endroits en matière plastique électriquement conductrice (200), en particulier dans une zone où est disposé l'élément de capteur (122) pouvant être exposé au milieu fluide.

5. Dispositif de capteur selon la revendication 1, **caractérisé en ce que** la matière plastique électriquement conductrice (200) présente une résistivité électrique volumique inférieure à 10⁶ Qcm (ohm-centimètre).

6. Dispositif de capteur selon la revendication 1 ou 2, **caractérisé en ce que** ledit au moins un élément de mise en contact (180) est réalisé sous la forme d'une vis (186), la vis étant vissée dans la paroi de tronçon de canal (116) et/ou dans la paroi de canal (160) pour la mise en contact électrique de la paroi de tronçon de canal (116) et/ou de la paroi de canal (160).

7. Dispositif de capteur selon la revendication 1, **caractérisé en ce que** ledit au moins un élément de mise en contact (180) est disposé dans la cloison de la paroi de tronçon de canal (116) délimitant l'ouverture d'introduction (113).

8. Dispositif de capteur selon la revendication 7, **caractérisé en ce que** ledit au moins un élément de mise en contact (180), lorsque le boîtier de capteur (126) est introduit dans le tronçon de canal (110), est mis en contact électrique par au moins une fiche de contact de potentiel (143) disposée sur le boîtier de capteur (126) .
